# EUROPEAN PATENT APPLICATION

(11) **EP 1 617 620 A1**
(43) Date of publication of application: **18.01.2006**
(21) Application number: 05013478.2
(22) Date of filing: 22.06.2005
(51) Int. Cl.: H04L 29/06

(54) **Method and apparatus for user authentication and authorization**

(30) Priority: 22.06.2004 US 873732
(71) Applicant: Avaya Technology Corp., Basking Ridge, NJ 07920 (US)
(72) Inventor: Srinivas, Tanjore, Howell New Jersey 07731 (US); Chakravarthi, Lakshmi, Morganville New Jersey 07751 (US); Sumetpong, Prem, Hazlet New Jersey 07730 (US); Khakoo, Shabbir A., Morganville New Jersey 07751 (US)
(74) Representative: Epping - Hermann - Fischer

(57) **Abstract**

A method and apparatus (200) for user authentication and authorization for accessing resources on data servers (110, 116) coupled to an application server (202). A system authenticator (204) is used to validate user authorization information, and an authenticator (104, 106) of a respective data server (110, 116) issued to validate user authentication information.

## Description

### BACKGROUND OF THE INVENTION

The present invention generally relates to a field of security enhancements in computer networks and, in particular, to methods and apparatus for providing secure access to resources on data servers coupled to network accessible application servers.

In computer networks, back end data servers are usually coupled to a network using a network accessible application server such as, e.g., a Java 2 Enterprise Edition (J2EE) application server. To secure a back end data server, user authorization and authentication information is typically validated, in a form of a user login, by an authenticator of the application server whenever the user requests an access to the resources on the data server.

Application servers use a restrictive approach for users requesting access to the back end data servers. In particular, the application server typically requires that each back end data server hosts both the user authentication information and the user authorization information. However, consolidated or diverse enterprises, merged organizations, among other clients and/or owners of resources on the data servers, may have separate infrastructures for defining the user authentication and authorization information, and such restrictive requirements for a user login may be incompatible with their operational needs.

Therefore, there is a need in the art for an improved method and apparatus for user authentication and authorization for network access.

### SUMMARY OF THE INVENTION

The present invention generally relates to a method and apparatus for user authentication and authorization for accessing resources on a data server that is coupled to a computer network using an application server. In exemplary applications, the invention facilitates access to the resources for users having the authentication information and authorization information stored separately on different data servers (e.g., Sun One Directory Server, Active Directory Server, and the like) coupled to an exemplary Java 2 Enterprise Edition (J2EE) application server.

In a first aspect of the present invention, there is provided a method for verifying user authentication and authorization using a provided Secure Server (Ssdp) Authenticator (also referred to as a system authenticator) to validate user authorization information and using an authenticator of a respective data server to validate user authentication information. In one embodiment, the method performs steps of providing the application server with the Ssdp authenticator, providing user authorization information to a management server accessible by the Ssdp authenticator, validating user authentication information using an authenticator of the data server, and validating the user authorization information using the Ssdp authenticator.

In a second aspect of the present invention, there is provided an apparatus facilitating the inventive method.

Other objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not necessarily drawn to scale and that, unless otherwise indicated, they are merely intended to conceptually illustrate the structures and procedures described herein.

### BRIEF DESCRIPTION OF THE DRAWINGS

In the drawings, wherein like reference numerals dispute similar elements;
FIG. 1 depicts a block diagram of a conventional apparatus for user authentication and authorization for accessing resources on data servers;
FIG. 2 depicts a block diagram of an exemplary apparatus of a kind that may be used for user authentication and authorization for accessing resources on data servers in accordance with one embodiment of the present invention; and
FIG. 3 depicts a flow diagram illustrating a method of user authentication and authorization using the apparatus of FIG. 2 in accordance with one embodiment of the present invention.

### DETAILED DESCRIPTION OF THE PRESENTLY PREFERRED EMBODIMENTS

The present invention generally relates to security enhancements in computer networks. In particular, the invention relates to a method and apparatus for user authentication and authorization for accessing resources on data servers coupled to a network accessible application server such as, e.g., a Java 2 Enterprise Edition (J2EE) application server, and the like.

Embodiments of the invention allow the validation of authentication and authorization information of the users, wherein such information is respectively stored in separate data servers. Herein, the term "authentication information" refers to user Principal ID (e.g., user name) and credentials (e.g., password) and the term "authorization information" refers to a right of access (e.g., group/role) to a particular resource on a data server. For example, user authentication information may be stored in one of a Sun One Directory Server or an Active Directory Server, while authorization information of the user may illustratively be stored in a different Sun One Directory Server.

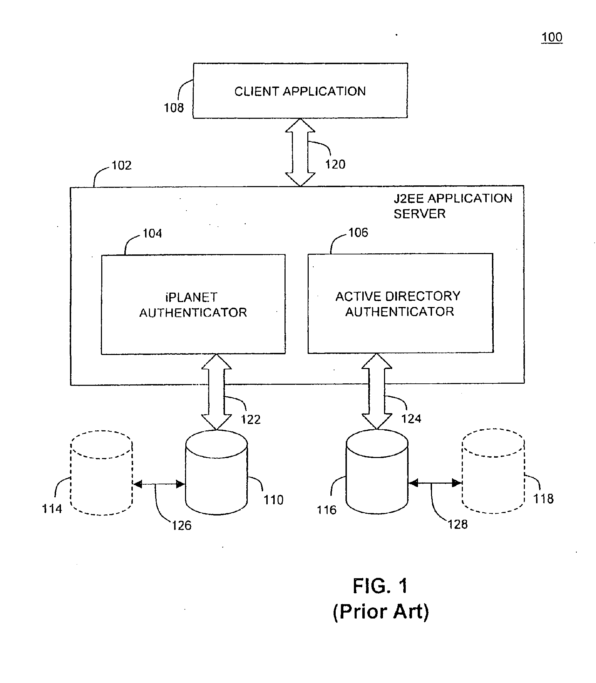

FIG. 1 depicts a block diagram of a conventional apparatus 100 for user authentication and authorization for accessing resources on data servers coupled to a network accessible application server. The apparatus 100 comprises a web accessible J2EE application server 102 supporting the Java Authentication and Authorization Service (JAAS) configuration and back end data servers 110 (Sun One Directory Server) and 116 (Active Directory Server). A client application 108 (e.g., Java-based or web-based application) is illustratively coupled to the J2EE application server 102 using an interface 120. Data servers 110 and 116 are coupled to the application server 102 using interfaces 122 and 124, respectively. In the J2EE application server 102, access to the Sun One Directory Server 110 and Active Directory Server 116 is administered using, for example, an iPlanet Authenticator 104 and Active Directory Authenticator 106, respectively.

To sign on and obtain access to the resources on the data servers 110 and 116, the client application 108 connects to the application server 102 and uses the Login configuration of the server. The server 110 and server 116 may perform as a master server that can be chained to an optional slave data server 114 (Sun One Directory Server) or 118 (Active Directory Server) using a digital link 126 or 128, respectively.

In the apparatus 100, both the user authentication information and the authorization information are stored on the back end data server to which user access is sought. Thus, if access to server 110 is sought, server 110 will contain authentication and authorization information of the user. In other words, the client application 108 may obtain access to resources on a respective master data server (110,116) and/or an optional chained data server (114, 118) only when both the user authentication information and the user authorization information are stored on the same master data server.

In the Login configuration of the J2EE application server 102, the iPlanet Authenticator 104 and Active Directory Authenticator 106 independently perform validation (i.e., verification) of the user authentication information and user authorization information for the Sun One Directory Server 110 (iPlanet Authenticator 104) and Active Directory Server 116 (Active Directory Authenticator 106), respectively. Herein, the terms "validation" and "verification" are used interchangeably. When a user logs in (or signs on), each authenticator independently retrieves and verifies the user Principal ID and credentials (authentication information) and the user group/role data (authorization information) against such data in a pre-configured Lightweight Directory Access Protocol (LDAP) data store (not shown) of a respective back end data server (i.e., server 110 or server 116).

As such, in the apparatus 100, the J2EE application server 102 requests that a single back end data server (e.g., Sun One Directory Server 110 or Active Directory Server 116) hosts both the information satisfying the user authentication needs and the information for the user entitlement policy.

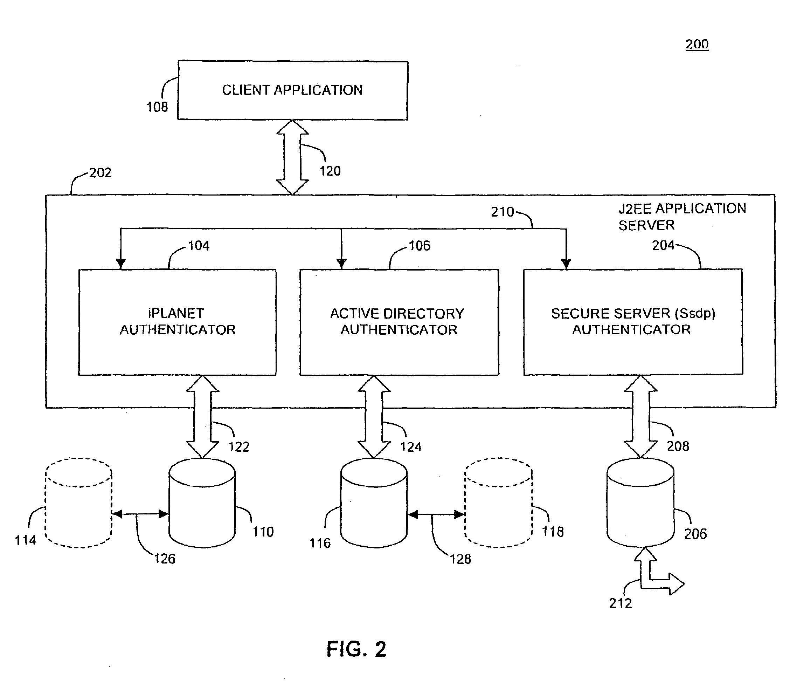

FIG. 2 depicts a block diagram of an exemplary apparatus 200 of a kind that may be used for user authentication and authorization for accessing resources on data servers in accordance with one embodiment of the present invention.

In the depicted embodiment, the apparatus 200 comprises the J2EE application server 202 that is interfaced with the client application 108, a management server 206, and chained pairs 110/114 and 116/118 of the back end Sun One Directory Servers and Active Directory Servers, respectively. In the apparatus 200, the J2EE application server 202 includes the iPlanet Authenticator 104, the Active Directory Authenticator 106, and also comprises a Secure Server (Ssdp) Authenticator 204 coupled to the management server 206 using an interface 208. Similar to the authenticators 104 and 106, the Ssdp Authenticator 204 follows the rules of the JAAS configuration for multiple authenticators. In alternate embodiments (not shown), the J2EE application server 102 may include other custom or default authenticators to control user access to the corresponding data servers.

In one exemplary embodiment, the management server 206 comprises an LDAP data store (not shown) that contains the user authorization information for all back end data servers coupled to the J2EE application server 202 (e.g., servers 110/114 and/or 116/118). The user authorization information may be provided, in a centralized manner, to the management server 206 using, for example, a user interface (UI) 212 coupling data management sources of a client-owned information exchange network (not shown).

In the apparatus 200, user authentication information is generally stored on the back end data servers 110 and 116, as discussed above in reference to FIG. 1. In an alternate embodiment, the user authentication information, i.e., Principal ID and credentials, may also be provided, via the UI 212, to the management server 206 and be available to the Authenticators 104 and 106. However, during a user login procedure, the Ssdp Authenticator 204 does not participate in validating the authentication information of the user.

In the Login configuration of the J2EE application server 102, the Ssdp Authenticator 204 retrieves from the management server 206 the authorization information of the user requesting access to a back end data server (e.g., Sun One Directory Server 110 or the Active Directory Server 116). The Ssdp Authenticator 204 verifies the users authorization for accessing the requested resources on a back end data server and communicates, via a digital link 210, the result of the verification process to a authenticator of the respective back end data server (e.g., iPlanet Authenticator 104 or Active Directory Authenticator 106). Such Ssdp Authenticator 204, as well as the digital link 210, may be implemented in a form of software (i.e., computer program) or, alternatively, a combination of software and computer hardware of the J2EE application server 102.

When user authorization information in the LDAP data store of a back end data server (i.e. server 110 or 116) is missing or outdated, the Ssdp Authenticator 204 may be used as a source of the user authorization information, thus allowing execution the log in process. As such, in the situations when infrastructures of the user authentication and user authorization processes are separated, the Ssdp Authenticator 204 facilitates login for the users having validated authentication and authorization information.

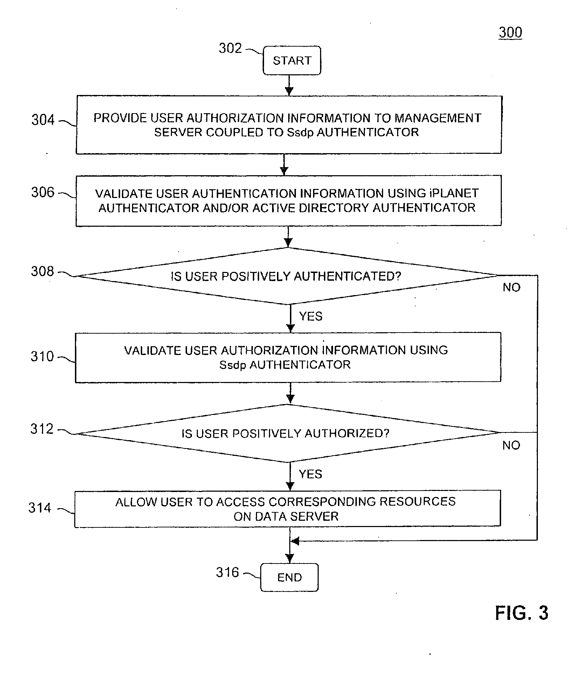

FIG. 3 depicts a flow diagram illustrating a method 300 of user authentication and authorization using the apparatus of FIG. 2 in accordance with one embodiment of the present invention of FIG. 2. The method 300 starts at step 302 and proceeds to step 304 where user authorization information (e.g., group/role data) is provided, via the UI 210, to the LDAP data store on the management server 206. In an alternate embodiment, user authentication information may also be stored on the management server 206 along with the user's group/role data, as discussed in reference to FIG. 2 above.

At step 306, in the Login configuration of the J2EE application server 102, an authenticator of a back end data sever to which resources the access is requested (e.g., iPlanet Authenticator 104 or Active Directory Authenticator 106) validates Principal ID and credentials of the user. In particular, the authenticator retrieves and validates the user authentication information against the data stored in a LDAP data store of the respective back end data server. During step 306, a check response from the Ssdp Authenticator 204 is set to "false" and is ignored because validation against a user password is performed by either the iPlanet Authenticator 104 or Active Directory Authenticator 106.

At step 308, the method 300 queries if the user is positively authenticated. If the query of step 308 is negatively answered, the login process is aborted (i.e., terminated) and the method 300 proceeds to step 316, where the method ends. If the query of step 308 is affirmatively answered (i.e., user authentication information is validated), the method 300 proceeds to step 310.

At step 310, the Ssdp Authenticator 204 validates the authorization information of the user against the data that was stored, at step 304, in a LDAP data store of the management server 206. The results of validating the user authorization information are communicated to the authenticator of the back end data server (e.g., server 110 or 116) access to which resources have been requested by the user.

At step 312, the method 300 queries if the user is positively authorized. If the query of step 312 is negatively answered, the login process is terminated and the method 300 proceeds to step 316, where the method ends. If the query of step 312 is affirmatively answered (i.e., user authorization information is validated), the method 300 proceeds to step 314.

At step 314, the authenticator of the respective back end data server facilitates access to the corresponding resources on the server to the user having validated, at steps 308 and 312, authentication and authorization information. Upon completion of step 314, at step 316, the method 300 ends.

Thus, while there have been shown and described and pointed out fundamental novel features of the present invention as applied to preferred embodiments thereof, it will be understood that various omissions and substitutions and changes in the form and details of the devices described and illustrated, and in their operation, and of the methods described may be made by those skilled in the art without departing from the spirit of the present invention. For example, it is expressly intended that all combinations of those elements and/or method steps which perform substantially the same function in substantially the same way to achieve the same results are within the scope of the invention. Substitutions of elements from one described embodiment to another are also fully intended and contemplated. It is the intention, therefore, to be limited only as indicated by the scope of the claims appended hereto.

## Claims

1. A method of user authentication and authorization for accessing resources on a data server (110, 116) coupled to a computer network (120) using an application server (202), comprising:
(a) providing the application server (202) with a system authenticator (204) validating user authorization information;
(b) providing the user authorization information to a management server (206) accessible by the system authenticator (204);
(c) validating user authentication information using an authenticator (104, 106) of the data server (110, 116), the authenticator (104, 106) provided in the application server (202) ;
(d) validating user authorization information using the system authenticator (204); and
(e) facilitating access to the resources on the data server (110, 116) after each of the steps (c) and (d) produced a positive confirmation.

2. The method of claim 1 wherein the application server (202) is a Java 2 Enterprise Edition (J2EE) server.

3. The method of claim 1 wherein the data server (110, 116) is selected from the group consisting of a Sun One Directory Server (110) and an Active Directory Server (116).

4. The method of claim 1 wherein the management server (206) uses Lightweight Directory Access Protocol (LDAP).

5. The method of claim 1 wherein the steps (c) and (d) further comprise:
- using Java Authentication and Authorization Service (JAAS) configuration.

6. The method of claim 1 wherein the step (b) further comprises:
- providing user authentication information to the management server (206).

7. The method of claim 6 further comprising:
- providing user authentication information to the authenticator (104, 106) of the data server (110, 116).

8. The method of claim 1 wherein the data server (110, 116) is a master data server (110, 116) further connected to another data server (114, 118).

9. The method of claim 1 wherein the authenticator (104, 106) of the data server (110, 116) is one of an iPlanet Authenticator (104) and an Active Directory Authenticator (106) of the application server (202).

10. The method of claim 1 wherein the application server (202) comprises a plurality of the data servers (110, 116).

11. An apparatus (200) for user authentication and authorization for accessing resources on a data server (110, 116) coupled to a computer network (120) using an application server (202), comprising:
an application server (202) having a system authenticator (204) and an authenticator (104, 106) of the data server
(110, 116); and
a management server (206) accessible by the system authenticator (204) and comprising user authorization information,
wherein the system authenticator (204) validates the user authorization information and the authenticator (104, 106) of the data server (110, 116) validates user authentication information;
the apparatus (200) being configured to perform a method according to one of the claims 1 to 10.

12. A computer-readable medium containing software that when executed by an application server (202) causes user authentication and authorization for accessing resources on a data server (110, 116) coupled to the application server (202) using a method according to one of the claims 1 to 10.
